# EUROPÄISCHE PATENTANMELDUNG

(11) **EP 3 813 186 A1**
(43) Veröffentlichungstag der Anmeldung: **28.04.2021**
(21) Anmeldenummer: 20000377.0
(22) Anmeldetag: 19.10.2020
(51) Int. Cl.: H01M 50/30, H01M 50/308, H01M 50/333, H01M 50/35, H01M 50/358, H01M 50/317

(54) **VENTIL ZUM DRUCKAUSGLEICH UND/ODER ZUR NOTENTLÜFTUNG EINES BEHÄLTERS, VORZUGSWEISE EINES GEHÄUSES EINER BATTERIE VON ELEKTROFAHRZEUGEN, SOWIE BEHÄLTER MIT EINEM SOLCHEN VENTIL**

(30) Priorität: 24.10.2019 DE 102019007454
(71) Anmelder: KACO GmbH + Co. KG, 74912 Kirchardt (DE)
(72) Erfinder: Schulz, Bernd, 74360 Ilsfeld (DE); Voll, Christian, 74912 Kirchardt (DE); Hein, Thomas, 75050 Gemmingen (DE); Genesius, Andreas, 74076 Heilbronn (DE)
(74) Vertreter: Kohl, Karl-Heinz

(57) **Zusammenfassung**

Das Ventil zum Druckausgleich und/oder zur Notentlüftung eines Behälters, vorzugsweise eines Gehäuses einer Fahrzeugbatterie, hat ein Gehäuse (6) mit einem Einlass (6a), der durch wenigstens ein unter Schließkraft stehendes Ventilelement (23) in einer ersten Stellung verschließbar ist. Das Gehäuse (6) ist wenigstens teilweise gasdurchlässig und vorzugsweise wasserdicht und hat wenigstens einen Auslass (26), der sich hinter dem Ventilelement (23) befindet, wenn das Ventilelement (23) seine erste Stellung einnimmt. Damit im Fall einer Fehlfunktion auch größere Gasmengen rasch über das Ventil nach außen geführt werden können, ist das Ventilelement (23) bei einem die Schließkraft übersteigenden erhöhten Druck am Einlass (6a) in Richtung auf eine zweite Stellung gegen die Schließkraft verstellbar, in der das Ventilelement (23) den Auslass (26) zumindest teilweise so freigibt, dass der Auslass (26) direkt mit dem Einlass (6a) strömungsverbunden ist.

## Beschreibung

Die Erfindung betrifft ein Ventil zum Druckausgleich und/oder zur Notentlüftung eines Behälters, vorzugsweise eines Gehäuses einer Batterie von Elektrofahrzeugen, nach dem Oberbegriff des Anspruches 1 sowie einen Behälter mit einem solchen Ventil nach Anspruch 16.

Um die Batterie eines Elektrofahrzeuges zu schützen, werden die einzelnen Module, die aus mehreren Batteriezellen bestehen, in ein Gehäuse eingebaut. In die Wandung des Gehäuses ist wenigstens ein Druckausgleichsventil eingesetzt, um einen Druckausgleich zwischen dem Umgebungsdruck und dem Innendruck des Behälters zu ermöglichen. Darüber hinaus sind solche Behälter mit einem weiteren Ventil versehen, das normalerweise in Schließstellung ist und nur dann öffnet, wenn es innerhalb des Behälters aufgrund einer Fehlfunktion zu einem Schaden an einem oder mehreren Batteriezellen bzw. Batteriemodulen kommt und sich infolgedessen innerhalb kurzer Zeit eine große Gasmenge und ein hoher Druck bildet. Durch Öffnen dieses zweiten Ventiles können die sich bildenden Gase aus dem Behälter abgelassen werden. Der Einsatz zweier Ventile ist allerdings kostspielig und aufwändig.

Es sind daher auch Ventile bekannt, mit denen nicht nur ein Druckausgleich, sondern auch eine Notentlüftung des Behälters möglich ist (EP 2 586 081 B1). Dieses Ventil hat ein gasdurchlässiges Ventilelement, das in einer ersten Stellung eine Einlassöffnung so verschließt, dass die im Behälter befindlichen Gase durch das Ventilelement gelangen können. Das Gehäuse des Ventiles hat einen Deckel, der so gestaltet ist, dass zwischen dem Deckel und dem äußeren Rand des Gehäusemantels Auslässe für die Gase gebildet werden. Tritt ein erhöhter Druck innerhalb des Behälters aufgrund einer Fehlfunktion auf, wird das Ventilelement gegen die Kraft einer Druckfeder abgehoben. Dadurch können die im Behälter befindlichen Gase am Ventilelement vorbei zu den Auslassöffnungen strömen. Die Auslassöffnungen sind schmale Vertiefungen in der Innenseite des Deckels, so dass der Gasaustausch im Falle einer Fehlfunktion häufig nicht ausreichend schnell erfolgen kann.

Der Erfindung liegt die Aufgabe zugrunde, das gattungsgemäße Ventil und den Behälter so auszubilden, dass im Falle einer Fehlfunktion auch größere Gasmengen rasch über das Ventil nach außen abgeführt werden können.

Diese Aufgabe wird beim gattungsgemäßen Ventil erfindungsgemäß mit den kennzeichnenden Merkmalen des Anspruches 1 und beim Behälter mit den Merkmalen des Anspruches 16 gelöst.

Das erfindungsgemäße Ventil ist so gestaltet, dass das Ventilelement in der ersten Stellung den Einlass vollständig vom Auslass trennt. Der Einlass und der Auslass liegen auf einander gegenüberliegenden Seiten des Ventilelementes. Wirkt auf das Ventilelement vom Einlass aus ein die Schließkraft übersteigender Druck, wird das Ventilelement gegen die Schließkraft von der ersten Stellung (Schließstellung) aus so verschoben, dass der Auslass zumindest teilweise freigegeben wird. Je nach der Höhe der Schließkraft und dem entgegenwirkenden Druck kann das Ventilelement unterschiedliche Zwischenpositionen einnehmen, in denen der Auslass mehr oder weniger freigegeben ist. Das Ventilelement kann vorteilhaft bis in eine Anschlagstellung (zweite Stellung) verschoben werden, in welcher der Auslass vollständig frei ist. In dieser Anschlagstellung liegen der Einlass und der Auslass vollständig auf der gleichen Seite des Ventilelementes. Befindet sich das Ventilelement in der ersten Stellung, dann können bei Normalbetrieb die im Behälter entstehenden Druckänderungen durch Gasaustausch mit der Umgebung ausgeglichen werden. Solche Druckänderungen treten beispielsweise auf, wenn im Gehäuse höhere Temperaturen herrschen, wenn etwa das das Gehäuse aufweisende Fahrzeug bei sommerlichen Temperaturen gefahren wird. Die im Gehäuse befindliche Luft dehnt sich infolge der höheren Temperaturen aus und kann über das Ventil nach außen strömen, so dass ein hoher Druck im Gehäuse nicht entstehen kann. Dadurch ist ein zuverlässiger Druckausgleich in beide Richtungen gewährleistet.

Tritt ein Störfall auf, bei dem im Behälter ein hoher Druck und eine große Gasmenge in kurzer Zeit anfällt, dann wird das Ventilelement gegen die Schließkraft in Richtung auf die zweite Stellung verstellt, in der der Auslass zumindest teilweise freigegeben ist. Dadurch können die Gase durch den Einlass unmittelbar zum Auslass gelangen, ohne dass die Gase durch das Ventilelement oder am Ventilelement vorbeiströmen müssen. Dadurch können auch sehr große Gasmengen innerhalb kürzester Zeit zuverlässig abgeleitet werden, so dass ein Verformen oder gar ein Zerbersten des Behälters ausgeschlossen wird.

Mit dem erfindungsgemäßen Ventil erfolgt in der beschriebenen Weise eine Reihenschaltung, indem das Gas im Normalbetrieb durch das Ventilelement strömt und bei hohem Druck das Ventilelement in Richtung auf die zweite Stellung verstellt und durch den zumindest teilweise freigegebenen Auslass nach außen gelangen kann. Das Ventilelement wirkt somit beim Berstschutz des Behälters mit.

Vorteilhaft befindet sich der Auslass in einem Mantel des Gehäuses. Dabei kann der Auslass so am Gehäusemantel vorgesehen sein, dass sich der Auslass nur wenig oberhalb des Ventilelementes in seiner ersten Stellung befindet. Dann reicht ein verhältnismäßig kurzer Verstellweg des Ventilelementes aus, um den Auslass zumindest teilweise freizugeben. Dadurch lassen sich sehr große Gasmengen und sehr hohe Drücke innerhalb kürzester Zeit aus dem Behälter abführen.

Das Ventilelement liegt bei einer vorteilhaften Ausführungsform in der zweiten Stellung an einem Anschlag an. Diese zweite Stellung ist vorteilhaft eine Dichtstellung, wodurch sichergestellt ist, dass die Gase nicht am Ventilelement vorbei strömen, sondern unmittelbar zum Auslass gelangen.

Bei einer bevorzugten Ausführungsform ist der Anschlag ein Stutzen, der mit Abstand vom Mantel des Gehäuses umgeben ist.

Zweckmäßig steht der Anschlag von einem Deckel des Gehäuses ab, mit dem der Innenraum des Ventiles geschlossen wird. Da der Anschlag am Deckel vorhanden ist, gelangt der Anschlag mit dem Aufsetzen des Deckels auf den Gehäusemantel in seine Einbaulage.

Eine kostengünstige und einfache Ausbildung ergibt sich, wenn der Anschlag und der Deckel einstückig miteinander ausgebildet sind. Dies verringert den Montageaufwand sowie die Kosten zur Herstellung des Deckels mit Anschlag.

Vorteilhaft wird die auf das Ventilelement wirkende Schließkraft durch wenigstens ein Schließelement, wie eine Druckfeder erzeugt. Als Druckfeder kann bevorzugt eine Schraubendruckfeder eingesetzt werden, mit der das Ventilelement über seinen Umfang gleichmäßig belastet werden kann.

Vorteilhaft ist zwischen dem Anschlag und dem Mantel des Gehäuses ein Ringraum gebildet, in den das das Ventilelement belastende Schließelement eingreift. Dadurch erfolgt auch eine Lagepositionierung des Schließelementes innerhalb des Gehäuses.

Der Anschlag für das Ventilelement in seiner zweiten Stellung kann auch durch den Deckel des Gehäuses gebildet sein.

Hierbei ist es vorteilhaft, wenn das Ventilelement mit einem axialen Stößel versehen ist, der durch eine Führungsöffnung im Deckel ragt und in der Führungsöffnung geführt ist.

Bei einer anderen Ausführungsform ist der Anschlag am Mantel des Gehäuses vorgesehen. In diesem Fall wird der Anschlag vorteilhaft durch wenigstens einen quer vom Mantel abstehenden Flanschteil gebildet. Besteht der Mantel aus Metall, lässt sich der Flanschteil einfach durch einen Biegevorgang anbringen.

Bei einer besonders vorteilhaften Ausbildung wird der Anschlag durch einen Ringflansch an einem Ende des Mantels des Gehäuses gebildet.

Vorteilhaft ist das Gehäuse am einlassseitigen Ende mit einem radial nach außen sich erstreckenden Ringflansch versehen. Mit ihm kann das Ventil in der Einbaulage am Behälter gesichert werden.

Der Ringflansch ist bevorzugt zumindest an seiner dem anderen Ende des Gehäuses zugewandten Seite zumindest teilweise mit wenigstens einem Dichtelement bedeckt. Mit ihm liegt der Ringflansch in der Einbaulage an der Innenwand des Behälters an und stellt sicher, dass die im Behälter befindlichen Gase nur durch den Ventileinlass zum Ventilelement gelangen können.

Eine besonders vorteilhafte Ausführung ergibt sich, wenn das Dichtelement so ausgebildet ist, dass es den Rand des Ringflansches umgreift.

Damit in der Einbaulage des Ventils eine zuverlässige Abdichtung an der Behälterwand in einfacher Weise erreicht werden kann, ist das Dichtelement an seiner dem anderen Ende des Gehäuses zugewandten Seite mit einer umlaufenden Ringwulst versehen. Sie wird in der Einbaulage des Ventiles elastisch zusammengedrückt, wodurch eine einwandfreie Abdichtung gewährleistet ist.

Das Ventilelement kann so ausgebildet sein, dass es selbst aus einem gasdurchlässigen Material besteht, wie beispielsweise expandiertes oder gepresstes PTFE oder PE.

Bei einer vorteilhaften Ausbildung ist das Ventilelement mit einer gasdurchlässigen Membran versehen.

Sie wird in vorteilhafter Weise von einem Ringkörper umfasst, an dem die Membran zuverlässig gehalten werden kann.

Zur Abstützung der Membran ist es vorteilhaft, wenn diese durch wenigstens einen Stützsteg gegen den einlassseitigen Druck abgestützt ist.

Das Ventilelement kann bei einer besonders vorteilhaften Ausbildung in seiner ersten Stellung durch Magnetkraft gehalten werden. Die auf das Ventilelement wirkende Schließkraft ist so eingestellt, dass das Ventilelement erst dann gegen die auf ihn wirkende Kraft verschoben wird, wenn der im Behälter entstehende Druck so groß wird, dass er rasch abgebaut werden muss, um eine Beschädigung des Behälters wegen zu hohen Drucks zu verhindern.

Da die Magnetkraft-Weg-Linie eine fallende Kennlinie ist, kann das Ventilelement schnell und sicher in Richtung auf die zweite Stellung verschoben werden. Der Auslass wird dadurch je nach Stellung des Ventilelementes teilweise oder vollständig freigegeben, so dass das Ventil bei gleichem Luftdurchsatz kleiner und somit kostengünstiger gebaut werden kann.

Das Ventil kann bei einer vorteilhaften Ausführungsform wenigstens ein Druckausgleichselement aufweisen, über das im Normalbetrieb Druckunterschiede zwischen dem Behälter und der Umgebung ausgeglichen werden können. Mit dem Druckausgleichselement ist eine Be- und Entlüftung des Behälterinnenraumes gewährleistet.

Das Druckausgleichselement ist vorteilhaft ein elastisch verformbares Elastomerteil, das mit dem Ventilelement verbunden ist. Dadurch wird das Druckausgleichselement zusammen mit dem Ventilelement verschoben. Das Druckausgleichselement ist vorteilhaft mit wenigstens einer Öffnung versehen, über die im Normalbetrieb und in der ersten Stellung des Ventilelementes der Innenraum des Behälters mit der Umgebung verbunden ist. Das Druckausgleichselement ist so eingebaut, dass es unter Radialspannung steht. Sie sorgt dafür, dass die Öffnung, die vorteilhaft ein Schlitz ist, durch eine Schließkraft geschlossen ist, die sich durch die Radialspannung ergibt. Diese Schließkraft ist so vorgesehen bzw. eingestellt, dass im Normalbetrieb im Behälter befindliche Gase die Öffnung des Druckausgleichselements öffnen und damit in die Umgebung des Ventils bzw. des Behälters gelangen können.

Eine einfache Montage des Ventiles ergibt sich, wenn am Gehäuse wenigstens eine Federzunge vorgesehen ist, die ein Arretierelement zur Befestigung des Ventiles am Behälter bildet. Die Federzunge wird bei der Montage des Ventiles zunächst elastisch so gebogen, dass das Ventil durch eine Einbauöffnung im Behälter gesteckt werden kann. Sobald die Federzunge aus der Einbauöffnung freikommt, federt die Federzunge in ihre Ausgangslage zurück, wodurch das Ventil am Behälter arretiert ist.

Der erfindungsgemäße Behälter ist mit wenigstens einem erfindungsgemäßen Ventil versehen.

Der Behälter ist zum Einbau des Ventiles mit wenigstens einer Einbauöffnung versehen. Sie kann sich an jeder geeigneten Stelle des Behälters befinden.

Vorteilhaft liegt das Ventil mit seinem Radialflansch in der Einbaustellung dichtend an der Innenseite des Behälters an.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand von vier in den Zeichnungen dargestellten Ausführungsbeispielen näher erläutert. Es zeigen
- Fig. 1: in schematischer Darstellung ein erfindungsgemäßes Ventil, das an einem Gehäuse einer Batterie eines Elektrofahrzeuges angeordnet ist,
- Fig. 2: in vergrößerter Darstellung und im Axialschnitt das erfindungsgemäße Ventil in einer ersten Stellung,
- Fig. 3: in einer Darstellung entsprechend Fig. 2 das erfindungsgemäße Ventil in einer zweiten Stellung mit einer anderen Ausführungsform eines Ventilelementes,
- Fig. 4: eine Draufsicht auf eine zweite Ausführungsform eines erfindungsgemäßen Ventils,
- Fig. 5: einen Schnitt längs der Linie C-C in Fig. 4,
- Fig. 6: eine Draufsicht auf eine dritte Ausführungsform eines erfindungsgemäßen Ventils,
- Fig. 7: einen Schnitt längs der Linie E-E in Fig. 6,
- Fig. 8: eine Draufsicht auf eine weitere Ausführungsform eines erfindungsgemäßen Ventils,
- Fig. 9: in vergrößerter Darstellung einen Schnitt längs der Linie A-A in Fig. 8,
- Fig. 10: das Ventil gemäß Fig. 8 in perspektivischer Darstellung.

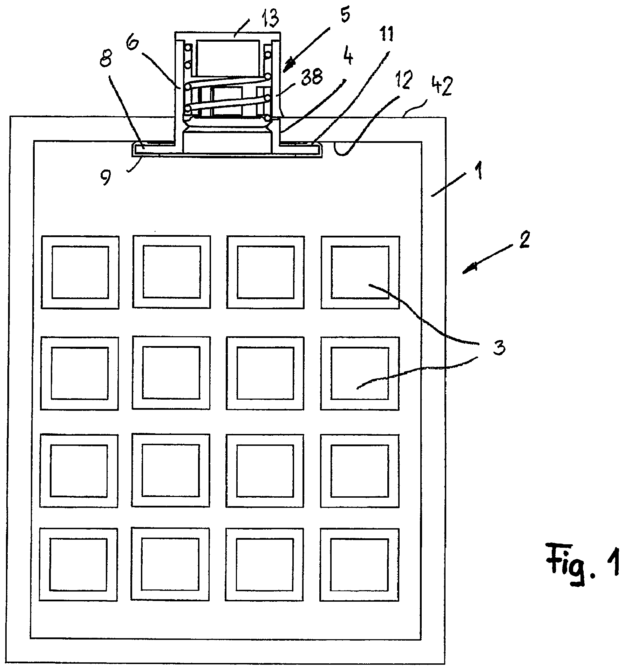

Die im Folgenden beschriebenen Ventile dienen zum Be- und Entlüften eines Gehäuseinnenraumes, wie beispielsweise dem Gehäuse 1 einer Batterie 2 eines Elektrofahrzeuges. Im Gehäuse 1 sind Batteriemodule 3 in bekannter Weise untergebracht. Jedes Batteriemodul 3 besteht aus mehreren Batteriezellen (Fig. 1).

Das Gehäuse 1 besteht vorteilhaft aus Metall und hat wenigstens eine Einbauöffnung 4, in die ein Ventil 5 eingesetzt wird. Es sitzt abgedichtet in der Einbauöffnung und sorgt für einen Druckausgleich zwischen dem Druck im Inneren des Gehäuses 1 und dem Außendruck. Das Ventil 5 sorgt dafür, dass sich das Gehäuse 1 durch Schwankungen des äußeren Luftdruckes oder der Außentemperatur nicht spürbar verformt.

Das Gehäuse 1 weist außer den Batteriemodulen 3 noch weitere Komponenten auf, die der Übersichtlichkeit wegen nicht dargestellt sind. Diese zusätzlichen Komponenten sind bei derartigen Batterien 2 an sich bekannt und umfassen beispielsweise Komponenten für das Management der Batteriemodule 3.

Das Gehäuse 1 kann jede geeignete Ausbildung haben. Je nach Größe des Gehäuses 1 kann auch mehr als nur ein Ventil 5 vorgesehen sein.

Die Einbauöffnung 4 und das Ventil 5 können an jeder geeigneten Seite des Gehäuses 1 vorgesehen sein.

Das Ventil 5 ist so ausgebildet, dass es in der beschriebenen Weise einen Druckausgleich ermöglicht und gleichzeitig für eine Notentlüftung des Gehäuses 1 sorgen kann, wenn im Gehäuse 1 z.B. infolge eines Kurzschlusses ein überhöhter Druck auftreten sollte, beispielsweise indem ein oder mehrere Batteriezellen bzw. -module in Brand geraten. Dann sorgt das Ventil dafür, dass der Innenraum des Gehäuses 1 schlagartig mit der Umgebung verbunden werden kann, wodurch der Druck im Gehäuse 1 schlagartig abgebaut werden kann.

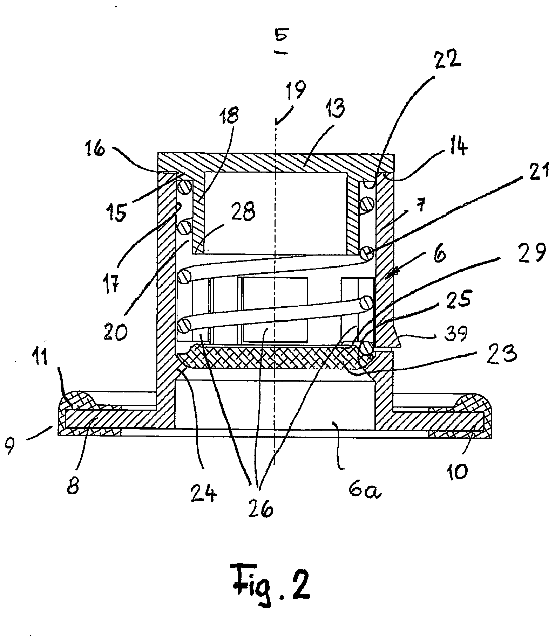

Das Ventil 5 hat ein Gehäuse 6 mit einem Mantel 7, der vorteilhaft zylindrisch ausgebildet und mit einem Einlass 6a versehen ist. An seinem einlassseitigen Ende geht der Mantel 7 in einen radial nach außen verlaufenden Ringflansch 8 über, dessen äußerer Rand von einem Dichtelement 9 umgriffen ist. Der Ringflansch 8 wird über einen Teil seiner radialen Breite an der Unterseite und an seiner Oberseite durch das Dichtelement 9 abgedeckt, das in geeigneter Weise am Ringflansch 8 befestigt ist. Außerdem bedeckt das Dichtelement 9 auch den Rand 10 des Ringflansches 8 (Fig. 2).

An der dem Mantel 7 zugewandten Oberseite ist das Dichtelement 9 mit einer Ringwulst 11 versehen, die sich über den Umfang des Ringflansches 8 nahe dessen äußerem Rand erstreckt und die vorteilhaft teilkreisförmigen Querschnitt aufweist.

In der Einbaulage gemäß Fig. 1 liegt der Ringflansch 8 unter Zwischenlage des Dichtelementes 9 dichtend an der Innenseite 12 des Gehäuses 1 an. Die umlaufende Ringwulst 11 des Dichtelementes 9 ist hierbei elastisch verformt. Dadurch ist gewährleistet, dass der Ringflansch 8 abgedichtet an der Gehäuseinnenseite 12 anliegt.

Das Ventilgehäuse 6 ist in geeigneter Weise am Gehäuse 1 befestigt, beispielsweise eingeclipst.

Das Gehäuse 6 ragt durch die Einbauöffnung 4 nach außen aus dem Gehäuse 1.

Das Gehäuse 6 ist an dem vom Ringflansch 8 abgewandten Ende durch einen Deckel 13 geschlossen, der fest mit dem Mantel 7 verbunden ist. Im Ausführungsbeispiel sitzt der Deckel 13 mit seinem äußeren Rand auf der Stirnseite 14 des Mantels 7. An seiner Unterseite ist der Deckel 13 mit einem umlaufenden Vorsprung 15 versehen, der so ausgebildet ist, dass er mit seinem äußeren Rand 16 an der Innenseite 17 des Mantels 7 anliegt. Der Vorsprung 15 erlaubt somit eine einwandfreie Zentrierung des Deckels 13 gegenüber dem Mantel 7.

Der Vorsprung 15 geht an seinem radial inneren Bereich in einen Stutzen 18 über, dessen Achse mit der Achse 19 des Gehäuses 6 zusammenfällt. Der Stutzen 18 wird mit Abstand von einem Teil des Mantels 7 umgeben. Zwischen dem Stutzen 18 und dem vom Ringflansch abgewandten Bereich des Mantels 7 wird ein Ringraum 20 gebildet, in den das eine Ende einer Druckfeder 21 ragt. Die radiale Breite des Ringraumes 20 ist so groß, dass sich die Druckfeder 21 im Ringraum 20 bei einer Druckbelastung entsprechend bewegen kann.

Die Druckfeder 21 stützt sich mit ihrem einen Ende an einer Stirnseite 22 des Vorsprunges 15 ab. Mit ihrem anderen Ende belastet die Druckfeder 21 ein Ventilelement 23, das im Ausführungsbeispiel ein plattenförmiger Kolben ist. Er liegt unter der Kraft der Druckfeder 21 an einem Ventilsitz 24 an, der an der Innenseite 17 des Mantels 7 vorgesehen ist. Beispielhaft ist der Ventilsitz 24 kegelförmig ausgebildet. Der Kolben 23 hat eine entsprechende Sitzfläche 25, mit der er dichtend am Ventilsitz 24 unter der Kraft der Druckfeder 21 anliegt.

Der Ventilsitz 24 ist vorteilhaft einstückig mit dem Mantel 7 ausgebildet. Der Ventilsitz 24 liegt mit geringem axialem Abstand zum Ringflansch 8.

Bei Normalbetrieb der Batterie 2 liegt der Kolben 23 entsprechend Fig. 2 unter der Kraft der Druckfeder 21 am Ventilsitz 24 an. In dieser Lage hat der Kolben 23 axialen Abstand vom Stutzen 18.

Im Bereich zwischen dem Stutzen 18 und dem Ventilsitz 24 ist am Mantel 7 wenigstens eine Auslassöffnung 26 vorgesehen, durch die bei einem Brand- oder Explosionsfall an einer Batteriezelle im Batteriegehäuse 1 ein entstehender Druck rasch abgebaut werden kann, so dass eine Beschädigung benachbarter Batteriezellen oder -module bzw. des Batteriegehäuses 1 verhindert wird. Im Ausführungsbeispiel sind über den Umfang des Mantels 7 mehrere Auslassöffnungen 26 vorgesehen, die einen ausreichend großen Querschnitt haben, damit ein Druckabbau in kürzester Zeit erfolgen kann.

Im Normalbetrieb der Batterie 2 sind die Auslassöffnungen 26 durch den Kolben 23 vom Innenraum des Gehäuses 1 getrennt.

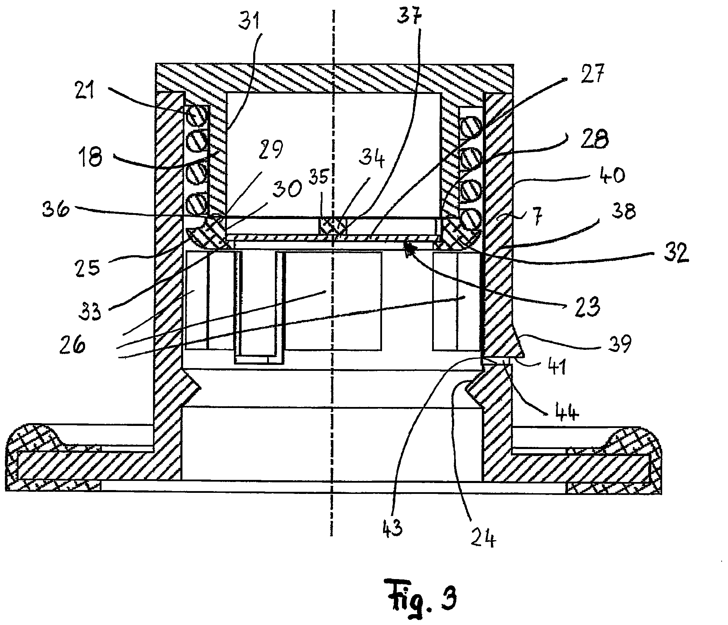

Damit bei Normalbedingungen ein Druckausgleich zwischen dem Innenraum des Gehäuses 1 und der Umgebung des Gehäuses 1 stattfinden kann, kann im Kolben 23 eine permeable Membran 27 vorgesehen sein, wie Fig. 3 zeigt, oder der Kolben 23 selbst ist so ausgebildet, dass er gasdurchlässig ist und auf diese Weise den Druckausgleich gewährleistet (Fig. 2).

In der Schließstellung des Kolbens 23 (Fig. 2) erfolgt der Druckausgleich zwischen dem Innenraum des Batteriegehäuses 1 und der Umgebung ausschließlich über das permeable Material des Kolbens 23 bzw. seiner Membran 27. Das entsprechende Gas kann nach dem Durchtritt durch den Kolben 23 über die Auslassöffnungen 26 nach außen gelangen.

Die Druckfeder 21 ist so eingestellt, dass sie den Kolben 23 bei Normalbedingungen in Anlage am Ventilsitz 24 hält.

Tritt im Gehäuse 1 beispielsweise infolge eines Kurzschlusses ein hoher Druck auf, kann es zu einer Entzündung der Batteriemodule 3 oder der Batteriezellen kommen. Dann wird der Kolben 23 durch diesen hohen Druck im Batteriegehäuse 1 schlagartig gegen die Kraft der Druckfeder 21 vom Ventilsitz 24 abgehoben. Die Kraft der Druckfeder 21 ist so eingestellt, dass der Kolben 23 unter dem erhöhten Druck im Batteriegehäuse 1 in Richtung auf die Stirnseite 28 (Fig. 2) des Stutzens 18 bewegt wird. Bei sehr hohem Druck und entsprechend eingestellter geringer Federkraft kann der Kolben 23 so weit verschoben werden, dass er an der Stirnseite 28 des Stutzens 18 zur Anlage kommt. Diese Lage ist in Fig. 3 dargestellt. Der Kolben 23 nimmt in dieser Lage eine solche Stellung ein, dass die Auslassöffnungen 26 frei und mit dem Innenraum des Batteriegehäuses 1 unmittelbar verbunden sind. Dadurch kann der im Batteriegehäuse 1 auftretende Überdruck über die nunmehr freiliegenden Auslassöffnungen 26 rasch abgebaut werden.

Der Stutzen 18 und/oder der Kolben 23 sind so ausgebildet, dass in der Anschlagstellung gemäß Fig. 3 der gesamte Querschnitt der Auslassöffnungen 26 mit dem Innenraum des Batteriegehäuses 1 direkt verbunden ist.

Die Auslassöffnungen 26 sind so vorgesehen, dass der Kolben 23 bereits nach kurzem Verschiebeweg über den unteren Rand der Auslassöffnungen 26 hinaus gelangt. Da die Auslassöffnungen 26 zumindest in Umfangsrichtung des Mantels 7 des Gehäuses 6 eine große Länge haben, steht schon nach kurzem Verschiebeweg ein großer Durchströmquerschnitt für das Gas zur Verfügung.

Die Auslassöffnungen 26 haben einen Querschnitt, der vorteilhaft größer ist als der Querschnitt des Einlasses 6a, so dass ein rascher Druckabbau erreicht werden kann.

Sobald der Überdruck im Batteriegehäuse 1 abgebaut ist, wird der Kolben 23 durch die Druckfeder 21 wieder gegen den Ventilsitz 24 gedrückt (Fig. 2).

Infolge der beschriebenen Ausbildung des Ventiles 5 ist ein Austausch von Ventilteilen beim Auftreten eines Notfalles nicht erforderlich. Der Überdruck im Batteriegehäuse 1 führt lediglich dazu, dass der Kolben 23 vom Ventilsitz 24 abgehoben und die Auslassöffnungen 26 zumindest teilweise freigegeben werden, so dass der Überdruck schlagartig und rasch abgebaut werden kann, so dass eine Beschädigung des Batteriegehäuses 1 nicht auftritt. Nach einem Störfall ist es daher nicht notwendig, das Ventil 5 auszutauschen bzw. einzelne Ventilteile zu ersetzen.

Damit der Kolben 23 zuverlässig im Gehäuse 6 des Ventiles 5 verschoben werden kann, ist sein Außendurchmesser geringfügig kleiner als der Innendurchmesser des Mantels 7.

Vorteilhaft ist der radial äußere Rand des Kolbens 23 in seiner Dicke verringert. Die Druckfeder 21 liegt in diesem Randbereich am Kolben 23 an.

Vorteilhaft ist der Kolben 23 in dem Bereich, in dem er an der Stirnseite 28 des Stutzens 18 zur Anlage kommen kann, mit einem ringförmigen Vorsprung 29 versehen. Insbesondere wenn der Kolben 23 mit der permeablen Membran 27 versehen ist (Fig. 3), wird durch den ringförmigen Vorsprung 29 eine Beschädigung der Membran 27 verhindert, wenn der Kolben 23 durch den Überdruck im Batteriegehäuse 1 gegen die Kraft der Druckfeder 21 gegen den Stutzen 18 gedrückt werden sollte. Aufgrund des Überdruckes im Batteriegehäuse 1 wird der Kolben 23 schlagartig in Richtung auf den Stutzen 18 verschoben, um den Zugang zu den Auslassöffnungen 26 innerhalb kürzester Zeit zu gewährleisten.

Bei der Ausführungsform gemäß Fig. 3 ist die Membran 27 vorteilhaft so ausgebildet, dass sie einen Außendurchmesser aufweist, welcher dem Innendurchmesser des Stutzens 18 entspricht. Die Membran 27 ist gegenüber der Stirnseite des Vorsprunges 29 zurückgesetzt, so dass sie bei einem eventuellen Anschlagen des Vorsprunges 29 an die Stutzenstirnseite 28 nicht beschädigt wird.

Wie Fig. 3 weiter zeigt, ist der Vorsprung 29 so ausgebildet, dass seine zylindrische Innenseite 30 in der Anschlagstellung am Stutzen 18 zumindest etwa eine stetige Fortsetzung der Innenseite 31 des Stutzens 18 bildet. Die Membran 27 ist in geeigneter Weise am Kolben 23 befestigt. Er hat bei der Ausführungsform nach Fig. 3 einen Ringkörper 32, der an seiner Außenseite die Sitzfläche 25 zur Anlage am Ventilsitz 24 aufweist.

Von der Innenseite 30 des Ringkörpers 32 steht radial nach innen eine ringförmige Auflage 33 ab, auf der die Membran 27 in ihrem Randbereich aufliegt. Die Auflage 33 ist vorteilhaft an dem dem Ventilsitz 24 zugewandten Ende des Ringkörpers 32 vorgesehen.

Der Ringkörper 32 des Kolbens 23 umschließt wenigstens einen diagonal verlaufenden Steg 34, der mit beiden Enden an die Innenseite 30 des Ringkörpers 32 anschließt. Vorteilhaft hat der Kolben 23 mehrere solcher diagonal verlaufender Stege 34, die einander in halber Länge kreuzen. Die Stege 34 sind vorteilhaft einstückig mit dem Ringkörper 32 ausgebildet.

Die Stege 34 stützen die Membran 27 an ihrer vom Ventilsitz 24 abgewandten Seite ab. Wie aus Fig. 3 hervorgeht, sind die Stege 34 so ausgebildet, dass ihre Oberseite 35 in der gleichen Ebene mit der Stirnseite 36 des Ringkörpers 32 liegt. Die Membran 27 liegt an der Unterseite 37 der Stege 34 an.

Die Stege 34 stellen sicher, dass die Membran 27 nicht unzulässig weit verformt wird, wenn ein entsprechender Druck auf die Membran 27 wirkt.

Der Mantel 7 ist mit wenigstens einer federnden Zunge 38 versehen, die am freien Ende mit einer nach außen verlaufenden Schrägfläche 39 versehen ist, die über die Außenseite 40 des Mantels 7 übersteht (Fig. 2 und 3).

Die wenigstens eine Federzunge 38 ermöglicht es, das Ventil 5 in einfacher Weise an einer Wand des Gehäuses 1 zu verrasten.

Das Ventil 5 wird von der Innenseite des Gehäuses 1 aus durch die Einbauöffnung 4 geschoben. Hierbei gelangt die Schrägfläche 39 der Federzunge 38 an den Rand der Einbauöffnung 4, wodurch die Federzunge 38 radial nach innen elastisch gebogen wird. Sobald die Federzunge 38 vom Rand der Einbauöffnung 4 freikommt, federt die Zunge 38 nach außen und verriegelt auf diese Weise das Ventil 5 an der entsprechenden Wand des Batteriegehäuses 1. In der Einbaulage liegt die Federzunge 38 mit ihrer Stirnseite 41 an der Außenseite 42 der entsprechenden Gehäusewand an (Fig. 1).

Damit die Zunge 38 zuverlässig elastisch gebogen werden kann, hat die Stirnseite 41 ausreichenden Abstand vom gegenüberliegenden Rand 43 einer Öffnung 44, in der die Federzunge 38 liegt.

Die Federzunge 38 ist so vorgesehen, dass das Ventil 5 in der Einbaulage mit seinem Dichtelement 9 unter ausreichender Kraft an der Innenseite 12 der Gehäusewand dichtend anliegt.

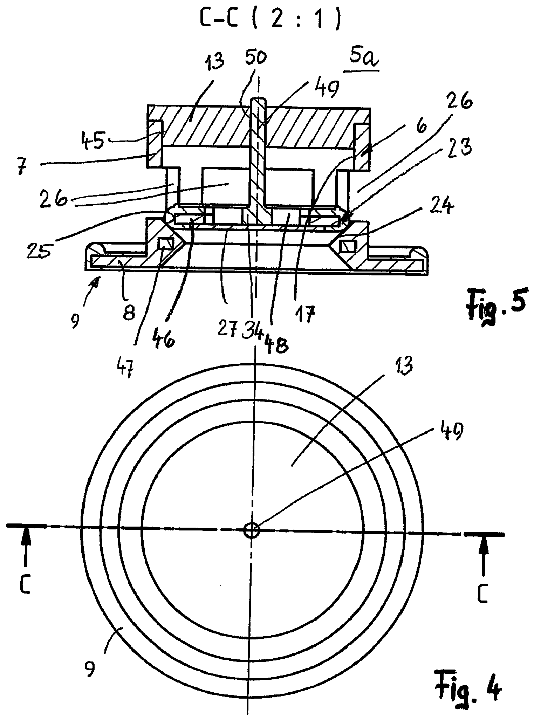

Das Ventil gemäß den Fig. 4 und 5 unterscheidet sich von der vorigen Ausführungsform im Wesentlichen dadurch, dass die auf den Kolben 23 wirkende Schließkraft nicht durch eine Druckfeder, sondern durch Magnetkräfte erzeugt wird. Das Ventil 5a gemäß den Fig. 4 und 5 hat das Gehäuse 6 mit dem Mantel 7, in dem die über den Umfang verteilt angeordneten Auslassöffnungen 26 vorgesehen sind. Der Mantel 7 greift mit seinem oberen Ende in eine außenseitige umlaufende Vertiefung 45 des Deckels 13 ein, der in geeigneter Weise fest mit dem Mantel 7 verbunden ist.

Der Mantel 7 ist an seinem vom Deckel 13 abgewandten Ende entsprechend der vorigen Ausführungsform mit dem Radialflansch 8 versehen, dessen Rand vom Dichtelement 9 umgriffen ist.

In der in Fig. 5 dargestellten Schließstellung liegt der Kolben 23 in der beschriebenen Weise am Ventilsitz 24 an, der an der Innenseite 17 des Mantels 7 vorgesehen ist. Der Kolben 23 hat die Sitzfläche 25, mit der er in der Schließstellung dichtend am Ventilsitz 24 anliegt.

In den Kolben 23 ist wenigstens ein Magnet 46 eingebettet, der vorteilhaft als Magnetring gestaltet ist. Als Gegenstück 47 dient wenigstens ein ferromagnetischer Körper, der ebenfalls vorzugsweise als Ring ausgebildet ist. Er ist im Bereich des Ventilsitzes 24 in den Mantel 7 eingebettet.

Es ist möglich, die Lage von Magnet 46 und Gegenstück 47 zu vertauschen, so dass sich dann der Magnet 46 im Mantel 7 und das Gegenstück 47 im Kolben 23 befindet.

Anstelle des ferromagnetischen Gegenstückes 47 kann ebenfalls ein Magnet eingesetzt werden, der eine zum Magneten 46 entgegengesetzte Polrichtung aufweist.

Der Magnet 46 ist vorteilhaft vollständig in den Kolben 23 eingebettet. Im Ausführungsbeispiel (Fig. 5) ist die Innenseite des Magneten 46 nicht vom Material des Kolbens 23 bedeckt.

Die Magnetkräfte sind so gewählt, dass der Kolben 23 bei normalem Betrieb dichtend am Ventilsitz 24 des Gehäuses 6 anliegt. Damit bei Normalbedingungen ein Druckausgleich zwischen dem Innenraum des Gehäuses 1 und der Umgebung des Gehäuses stattfinden kann, ist der Kolben 23 so ausgebildet, dass er die permeable Membran 27 aufweist oder selbst so ausgebildet ist, dass er gasdurchlässig ist.

Der Druckausgleich im Gehäuse 1 kann über die permeable Membran 27 und den vom Magneten 46 umschlossenen Bereich 48 durch den Kolben 23 und weiter über die Auslassöffnungen 26 nach außen erfolgen.

Sobald im Gehäuse 1 der beschriebene hohe Druck beispielsweise infolge eines Kurzschlusses auftritt, wird der Kolben 23 durch diesen hohen Druck schlagartig gegen die Magnetkräfte vom Ventilsitz 24 abgehoben. Die Magnetkräfte sind dementsprechend so gewählt, dass der Kolben 23 schlagartig nach oben (bezogen auf die Darstellung gemäß Fig. 5) so weit verschoben wird, dass die Auslassöffnungen 26 frei liegen. Dadurch ist der Innenraum des Batteriegehäuses 1 unmittelbar mit den Auslassöffnungen 26 verbunden, so dass der im Batteriegehäuse 1 auftretende Überdruck sehr rasch abgebaut werden kann.

Damit der Kolben 23 beim Verschieben nicht in eine Schräglage gelangt, ist er über wenigstens ein Führungselement 49 im Deckel 13 geführt. Er hat eine ihn durchsetzende Führungsöffnung 50, durch welche das Führungselement 49 ragt. Es ist vorteilhaft als Stößel ausgebildet, der an der Wandung der Führungsöffnung 50 anliegt und mit seinem einen Ende fest mit dem Kolben 23 verbunden ist. Das Führungselement 49 steht von dem oder den Stegen 34 ab, die entsprechend der vorigen Ausführungsform angeordnet und ausgebildet sind. Vorteilhaft sind die Stege 34 und das Führungselement 49 einstückig miteinander ausgebildet. Da auch die Stege 34 vorteilhaft einstückig mit dem Ringkörper 32 des Kolbens 23 ausgebildet sind, kann der Kolben 23 mit dem Führungselement 49 und den Streben 34 einfach hergestellt und montiert werden.

Da bei dieser Ausführungsform eine Druckfeder nicht vorgesehen ist, kann das Ventil 5a sehr kompakt ausgebildet werden, insbesondere in Axialrichtung.

Abweichend vom dargestellten Ausführungsbeispiel können der Magnet 46 und das Gegenstück 47 auch im Deckel 13 sowie im Führungselement 49 vorgesehen sein. Auch dann kann der Kolben 23 unter Magnetkraft in seiner in Fig. 5 dargestellten Schließstellung gehalten werden.

Die auf den Kolben 23 wirkende Magnetkraft ist so eingestellt, dass bei Auftreten des beschriebenen erhöhten Druckes der Kolben 23 bis zur Anlage am Deckel 13 verschoben werden kann, so dass die Auslassöffnungen 26 vollständig freigegeben sind und der Druck rasch abgebaut werden kann. Sobald der Druckabbau erfolgt ist, wird der Kolben 23 infolge der auf ihn wirkenden Magnetkraft in seine Schließstellung zurückgeführt.

Das Führungselement 49 stellt sicher, dass sich der Kolben 23 bei seinem Hub nicht schrägstellt. Dadurch ist gewährleistet, dass der Kolben 23 im Notfall zuverlässig in seine Freigabestellung verstellt wird. Die Sitzfläche 25 des Kolbens 23 ist entsprechend der vorigen Ausführungsform, im Axialschnitt gesehen, gekrümmt ausgebildet. Diese gekrümmte Gestalt der Sitzfläche 25 trägt zu einer einwandfreien dichten Anlage am Ventilsitz 24 bei.

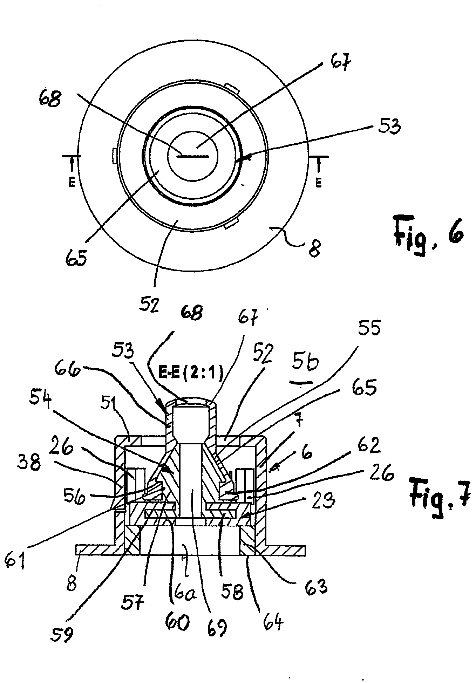

Das Ventil 5b gemäß den Fig. 6 und 7 hat das Gehäuse 6 mit dem zylindrischen Mantel 7, der an einem Ende in den Radialflansch 8 übergeht. Am anderen Ende ist der Mantel 7 mit einem radial nach innen gerichteten Ringflansch 51 versehen, der als Anschlag für den Kolben 23 dient, wenn er bei Auftreten eines entsprechend hohen Druckes im Behälter 1 in der beschriebenen Weise verschoben wird.

Der Ringflansch 51 umgibt eine Austrittsöffnung 52, durch die ein zur Be- und Entlüftung dienendes Druckausgleichselement 53 ragt. Es ist kappenförmig ausgebildet und sitzt auf einem Tragkörper 54, der mit dem Kolben 23 verbunden ist. Der Tragkörper 54 hat einen Konusteil 55, der sich in Richtung auf die Austrittsöffnung 52 verjüngt. Über einen umlaufenden Absatz 56 geht der Konusteil 55 an seinem breiteren Ende in einen zylindrischen Mittelteil 57 über. Er hat kleineren Außendurchmesser als der Konusteil 55 an seinem breiteren Ende.

Der Mittelteil 57 verbindet den Konusteil 55 mit einem Befestigungsteil 58, der größeren Außendurchmesser aufweist als der Mittelteil 57 und mit dem der Tragkörper 54 mit dem Kolben 23 verbunden ist.

Der Befestigungsteil 58 weist eine umlaufende Nut 59 auf, in die der Kolben 23 eingreift. Er wird durch eine flache Ringscheibe gebildet, die am Innenumfang eine umlaufende Nut 60 aufweist. Mittels der Nuten 59, 60 sind der Tragkörper 54 bzw. sein Befestigungsteil 58 und der Kolben 23 formschlüssig miteinander verbunden, indem sie mit ihren jeweiligen Abschnitten ineinandergreifen.

Der Mittelteil 57 ist an seiner Außenseite mit einer Ringnut 61 versehen, in die ein verdickter Halterungsteil 62 des Druckausgleichselementes 53 formschlüssig eingreift.

Der Außendurchmesser des Kolbens 23 ist in ausreichendem Maße kleiner als der Innendurchmesser des Gehäusemantels 7, so dass der Kolben 23 zuverlässig im Gehäuse 6 verschoben werden kann, um einen raschen Druckabbau zu ermöglichen.

In der Schließstellung liegt der Kolben 23 dichtend auf einer Hülse 63 auf, die an der Innenseite des Gehäusemantels 7 befestigt ist. Die Hülse 63 ist so vorgesehen, dass ihre eine Stirnseite 64 bündig liegt mit der Unterseite des Ringflansches 8 des Mantels 7. Die axiale Höhe der Hülse 63 ist so gewählt, dass sie ausreichenden Abstand von den Federzungen 38 hat, die in der beschriebenen Weise die Verrastung des Ventils an der Wand des Gehäuses 1 ermöglichen.

Das Druckausgleichselement 53 besteht aus elastomerem Material und hat über seine Höhe kreisförmigen Querschnitt. An seinem einen Ende ist es mit dem Halterungsteil 62 versehen, der so ausgebildet ist, dass er am Boden und an den Seitenwänden der Ringnut 61 des Mittelteils 57 des Tragkörpers 54 anliegt.

An den Halterungsteil 62 schließt ein kegelförmiger Übergangsabschnitt 65 an, der über seinen Umfang und seine Höhe an der Außenseite des Konusteiles 55 anliegt.

Etwa in Höhe des freien Endes des Konuskörpers 55 geht der Übergangsabschnitt 65 in einen zylindrischen hohlen Endabschnitt 66 über, der in der Schließstellung des Kolbens 23 über den größten Teil seiner axialen Länge durch die Austrittsöffnung 52 des Gehäuses 6 vorsteht. Der Außendurchmesser des Endabschnittes 66 ist wesentlich kleiner als der Innendurchmesser des Ringflansches 51, so dass die Bewegung des Kolbens 23 nicht behindert ist.

Der Endabschnitt 66 hat am freien Ende einen Verschlussteil 67, in dem sich ein Schlitz 68 befindet.

Im Ausführungsbeispiel ist der Schlitz 68, welcher den Verschlussteil 67 durchsetzt, diametral verlaufend angeordnet. Der Schlitz 68 hat Abstand vom zylindrischen Mantel des Endabschnittes 66 (Fig. 7).

Abweichend vom dargestellten Ausführungsbeispiel kann der Schlitz 68 auch jede andere geeignete Gestaltung haben. Er lässt sich bei der Herstellung des Druckausgleichselementes 53 vorsehen. Der Schlitz 68 kann aber auch nachträglich im Verschlussteil 67 angebracht werden.

Der Kolben 23 und der Konusteil 55 des Tragkörpers 54 weisen mittig eine axiale Durchgangsöffnung 69 auf, so dass der Einlass 6a des Ventiles mit dem Schlitz 68 strömungsverbunden ist.

Das Druckausgleichselement 53 wird auf den Tragkörper 54 aufgeschnappt. Hierbei ist das Druckausgleichselement 53 so gestaltet, dass es mit radialer Vorspannung auf dem Tragkörper 54 sitzt. Durch diese radiale Vorspannung wirkt auf den Schlitz 68 eine Schließspannung, die ihn in Schließstellung hält. Das Druckausgleichselement 53 ist so ausgebildet, dass die auf den Schlitz 68 wirkende Schließkraft durch den im Gehäuse 1 entstehenden Druck überwunden werden kann, wodurch der Schlitz 68 geöffnet wird und Druckunterschiede zur Umgebung ausgeglichen werden können. Dadurch kann bei Normalbedingungen der Druckunterschied zwischen dem Innenraum des Gehäuses 1 und der Umgebung zuverlässig abgebaut werden. Wie bei den vorigen Ausführungsbeispielen atmet das Ventil bei diesen Normalbedingungen.

Der Kolben 23 mit dem Druckausgleichselement 53 wird in der in Fig. 7 dargestellten Schließstellung durch Magnetkraft gehalten. Entsprechend der vorigen Ausführungsform kann im Kolben 23 oder in der Hülse 63 wenigstens ein Magnet vorgesehen sein, dem im jeweils anderen Teil ein entsprechendes Gegenstück zugeordnet ist. Auch können zwei Magnete mit gegensinniger Polarität im Kolben 23 und in der Hülse 63 vorgesehen sein, die sich anziehen. Die Magnetkraft ist so eingestellt, dass der Kolben 23 bei Normalbedingungen nicht von der Hülse 63 abhebt, so dass ein Druckausgleich zwischen dem Inneren des Gehäuses 1 und der Umgebung ausschließlich über den Einlass 6a des Ventiles 5b, durch die axiale Durchgangsöffnung 69 und den Schlitz 68 mit der Atmosphäre erfolgen kann.

Da der Endabschnitt 66 als Hohlkörper ausgebildet ist und nur geringe Wandstärke hat, kann der Schlitz 68 auch bei geringen Drücken durch elastische Verformung des Endabschnittes 66 bzw. seines Verschlussteiles 67 leicht geöffnet werden. Sobald ein Druckausgleich erfolgt ist, schließt der Schlitz 68 wieder.

Wie bei den vorigen Ausführungsbeispielen sind über den Umfang des Mantels 7 verteilt die Auslassöffnungen 26 vorgesehen. In Schließstellung des Kolbens 23 sind die Auslassöffnungen 26 abgedichtet, so dass ein Druckausgleich ausschließlich über den Schlitz 68 des Druckausgleichselementes 53 in der beschriebenen Weise erfolgt.

Tritt im Gehäuse 1 beispielsweise infolge eines Kurzschlusses ein überhöhter Druck auf, dann hebt der Kolben 23 unter diesem hohen Druck von der Hülse 63 gegen die Magnetkraft ab und kann so weit axial verschoben werden, bis er am Ringflansch 51 des Gehäuses 7 zur Anlage kommt. In dieser Lage sind die Auslassöffnungen 26 vollständig freigegeben, so dass der Innenraum des Gehäuses 1 mit der Umgebung verbunden ist und der Druck im Gehäuse 1 schlagartig abgebaut werden kann. Nach dem Druckausgleich kehrt der Kolben 23 in seine Schließstellung gemäß Fig. 7 zurück, in der er durch Magnetkräfte gehalten wird.

Die vom Ringflansch 51 des Mantels 7 umschlossene Austrittsöffnung 52 ist ausreichend groß, so dass das Druckausgleichselement 53 beim Verschieben des Kolbens 23 in seine Anschlagstellung am Ringflansch 51 nicht mit dem Rand der Austrittsöffnung 52 in Kontakt kommt. Dadurch ist ein sicherer Druckausgleich im Gefahrenfalle sichergestellt.

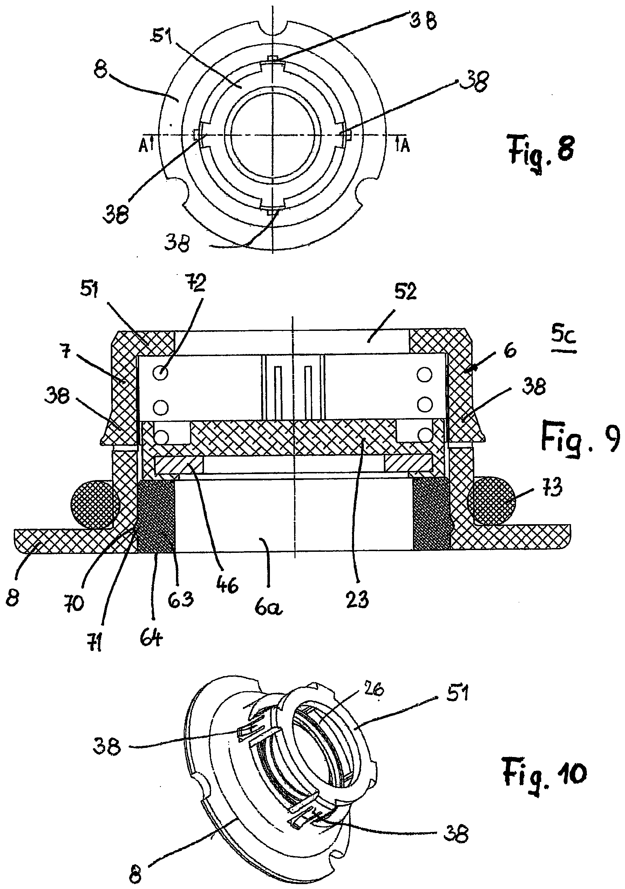

Auch beim Ausführungsbeispiel gemäß den Fig. 8 bis 10 wird der Kolben 23 in seiner Schließstellung durch Magnetkraft gehalten. Das Gehäuse 6 des Ventils 5c ist gleich ausgebildet wie beim vorigen Ausführungsbeispiel. Das Gehäuse 6 hat den zylindrischen Mantel 7, der an seinem einen Ende den radial nach außen gerichteten Radialflansch 8 und an seinem anderen Ende den radial nach innen gerichteten Ringflansch 51 aufweist, der als Anschlag für den Kolben 23 dient, wenn er bei Auftreten eines entsprechend hohen Druckes im Behälter 1 verschoben wird. Der Ringflansch 51 umgibt die Austrittsöffnung 52.

Der Mantel 7 des Gehäuses 6 ist mit den über seinen Umfang verteilt angeordneten Federzungen 38 versehen, mit denen das Ventil 5c in der beschriebenen Weise am Gehäuse 1 befestigt wird.

Das Gehäuse 6 besteht im Ausführungsbeispiel aus einem harten Kunststoff, kann aber auch aus Metall bestehen.

Wie bei der vorigen Ausführungsform ist an der Innenseite des Gehäusemantels 7 die Hülse 63 vorgesehen, deren Stirnseite 64 bündig liegt mit der Unterseite des Ringflansches 8 des Mantels 7. Die Hülse 63 kann über eine Klebeverbindung mit dem Gehäusemantel 7 verbunden sein. Im Ausführungsbeispiel ist die Hülse 63 zusätzlich auch formschlüssig mit dem Gehäusemantel 7 verbunden. Er hat eine Ringnut 70, in welche die Hülse 63 mit einer umlaufenden, über ihren Außenmantel vorstehenden Rippe 71 eingreift. Vorteilhaft haben die Ringnut 70 und die Rippe 71 teilkreisförmigen Umriss. Dadurch ist es beispielsweise möglich, die Hülse 63 von der Seite des Ringflansches 8 aus in den Gehäusemantel 7 einzusetzen, wobei die Hülse 63 mit der Rippe 71 leicht in die Ringnut 70 einrastet.

Bei einer solchen Formschlussverbindung ist es nicht zwingend notwendig, die Hülse 63 zusätzlich stoffschlüssig mit dem Gehäusemantel 7 zu verbinden.

Entsprechend der vorigen Ausführungsform liegt die Hülse 63 über ihre axiale Höhe mit ihrer Außenseite an der Innenseite des Gehäusemantels 7 an. Die Hülse 63 begrenzt den Einlass 6a.

Der Kolben 23 liegt in der in Fig. 9 dargestellten Schließstellung an der Stirnseite der Hülse 63 auf und wird in dieser Schließstellung durch Magnetkraft gehalten. Der Kolben 23 weist den Magneten 46 auf, der teilweise in den Kolben 23 eingebettet und ringförmig ausgebildet ist. Die Hülse 63 dient als Gegenstück zum Magneten 46 und kann als ferromagnetischer Körper ausgebildet sein.

Abweichend vom dargestellten Ausführungsbeispiel kann in die Hülse 63 ein ferromagnetischer Körper eingebettet sein, der vorzugsweise als Ring ausgebildet ist. Die Lage von Magnet 46 und ferromagnetischem Körper kann auch vertauscht sein. In diesem Falle befindet sich der Magnet 46 in der Hülse 63, während das ferromagnetische Gegenstück im Kolben 23 angeordnet ist.

Schließlich besteht die Möglichkeit, sowohl im Kolben 23 als auch in der Hülse 63 jeweils einen Magneten vorzusehen. Die beiden Magnete haben dann gegensinnige Polarität.

Der Außendurchmesser des Kolbens 23 ist kleiner als der Innendurchmesser des Gehäusemantels 7, so dass der Kolben 23 zuverlässig im Gehäuse 1 verschoben werden kann, wenn ein überhöhter Druck im Gehäuse 1 auftreten sollte.

Die Magnetkraft ist so eingestellt, dass der Kolben 23 bei Normalbedingungen im Gehäuse 1 dichtend auf der Hülse 63 aufliegt. Der Kolben 23 kann aus permeablem Material bestehen oder entsprechend der Ausführungsform gemäß Fig. 3 eine permeable Membran aufweisen, die für Gase durchlässig ist. Das durch den Kolben 23 hindurchtretende Gas kann über die Austrittsöffnung 52 sowie die Auslassöffnungen 26, die entsprechend den vorigen Ausführungsformen über den Umfang des Gehäusemantels 7 verteilt angeordnet sind, nach außen gelangen. Dadurch ist ein zuverlässiger Druckausgleich zwischen dem Innenraum des Gehäuses 1 und der Umgebung gewährleistet.

Tritt im Gehäuse 1 der beschriebene überhöhte Druck auf, dann wird der Kolben 23 unter dem hohen Gasdruck im Gehäuse 1 gegen die Magnetkraft von der Hülse 63 abgehoben und gegen den Ringflansch 51 des Gehäuses 6 verschoben. In dieser Anschlagstellung sind die Auslassöffnungen 26 freigegeben, so dass der hohe Druck im Gehäuse 1 über den Einlass 6a und die freigegebenen Auslassöffnungen 26 innerhalb kürzester Zeit abgebaut werden kann. Nach dem Druckausgleich kehrt der Kolben 23 in seine Schließstellung gemäß Fig. 7 zurück.

Damit der Kolben 23 sicher in seine Schließstellung zurückkehrt, kann es vorteilhaft sein, die Rückstellbewegung durch wenigstens eine Druckfeder 72 zu unterstützen. Sie ist im Bereich zwischen dem Kolben 23 und dem Ringflansch 51 angeordnet. Die Druckfeder 72 liegt lose auf dem Kolben 23 auf, so dass auf ihn in der Schließstellung keine Federkraft wirkt. In der Schließstellung hat die Druckfeder 72 vom Ringflansch 51 Abstand. Die Druckfeder 72 ist so eingestellt, dass sie in der Offenstellung des Kolbens 23 nur wenig verformt ist, so dass die Federkraft, die auf den Kolben 23 wirkt, kleiner ist als der erhöhte Druck, der in der beschriebenen Weise durch Verschieben des Kolbens 23 abgebaut werden soll. Durch die Druckfeder 72 ist sichergestellt, dass der Kolben 23 auf jeden Fall wieder in seine Schließstellung gemäß Fig. 9 zurückgeführt wird.

Da der Ringflansch 8 des Gehäuses 6 im Unterschied zu den vorigen Ausführungsbeispielen nicht von einem Dichtelement 9 übergriffen ist, ist zur Abdichtung des Ventils 5c in der Einbaulage eine Ringdichtung 73 vorgesehen, die am Übergang des Ringflansches 8 in den Gehäusemantel 7 angeordnet ist und in der Einbaulage des Ventiles 5c unter elastischer Verformung an der Innenseite 12 des Gehäuses 1 dichtend anliegt.

Die beschriebenen Ventile sind wasserdicht, so dass nicht die Gefahr besteht, dass Wasser in das Batteriegehäuse 1 gelangt.

Die kolbenförmige Gestaltung des Ventilelementes 23 ist nicht beschränkend zu verstehen. Es kann jede andere geeignete Form haben.

## Patentansprüche

1. Ventil zum Druckausgleich und/oder zur Notentlüftung eines Behälters, vorzugsweise eines Gehäuses einer Fahrzeugbatterie, mit einem Gehäuse (6), das einen Einlass (6a) aufweist, der durch wenigstens ein unter Schließkraft stehendes Ventilelement (23) in einer ersten Stellung verschließbar ist, das wenigstens teilweise gasdurchlässig und vorzugsweise wasserdicht ist, und mit wenigstens einem Auslass (26), der sich hinter dem Ventilelement (23) befindet, wenn das Ventilelement (23) seine erste Stellung einnimmt,
**dadurch gekennzeichnet, dass** das Ventilelement (23) bei einem die Schließkraft übersteigenden erhöhten Druck am Einlass (6a) in Richtung auf eine zweite Stellung gegen die Schließkraft verstellbar ist, in der das Ventilelement (23) den Auslass (26) zumindest teilweise so freigibt, dass der Auslass (26) direkt mit dem Einlass (6a) strömungsverbunden ist.

2. Ventil nach Anspruch 1,
**dadurch gekennzeichnet, dass** der Auslass (26) in einem Mantel (7) des Gehäuses (6) vorgesehen ist.

3. Ventil nach Anspruch 1 oder 2,
**dadurch gekennzeichnet, dass** das Ventilelement (23) in der zweiten Stellung an einem Anschlag (13, 18, 51) anliegt.

4. Ventil nach Anspruch 3,
**dadurch gekennzeichnet, dass** der Anschlag (13, 18, 51) ein Stutzen ist, der mit Abstand vom Mantel (7) des Gehäuses (6) umgeben ist.

5. Ventil nach Anspruch 3 oder 4,
**dadurch gekennzeichnet, dass** der Anschlag (18) von einem Deckel (13) des Gehäuses (6) absteht, der vorteilhaft einstückig mit dem Anschlag (18) ausgebildet ist.

6. Ventil nach einem der Ansprüche 3 bis 5,
**dadurch gekennzeichnet, dass** zwischen dem Anschlag (18) und dem Mantel (7) des Gehäuses (6) ein Ringraum (20) gebildet ist, in den wenigstens ein das Ventilelement (23) belastendes Schließelement (21), wie eine Druckfeder, eingreift.

7. Ventil nach Anspruch 3,
**dadurch gekennzeichnet, dass** der Anschlag durch den Deckel (13) des Gehäuses (6) gebildet ist.

8. Ventil nach Anspruch 3,
**dadurch gekennzeichnet, dass** der Anschlag (51) am Mantel (7) des Gehäuses (6) vorgesehen, vorzugsweise durch wenigstens einen quer vom Mantel (7) abstehenden Flanschteil gebildet ist.

9. Ventil nach einem der Ansprüche 1 bis 8,
**dadurch gekennzeichnet, dass** das Gehäuse (6) am einlassseitigen Ende einen radial nach außen sich erstreckenden Ringflansch (8) aufweist, das vorzugsweise zumindest an seiner dem anderen Ende des Gehäuses (6) zugewandten Seite zumindest teilweise mit wenigstens einem Dichtelement (9) bedeckt ist.

10. Ventil nach Anspruch 9,
**dadurch gekennzeichnet, dass** das Dichtelement (9) den Rand (10) des Ringflansches (8) umgreift.

11. Ventil nach Anspruch 9 oder 10,
**dadurch gekennzeichnet, dass** das Dichtelement (9) an seiner dem anderen Ende des Gehäuses (6) zugewandten Seite mit einer umlaufenden Ringwulst (11) versehen ist.

12. Ventil nach einem der Ansprüche 1 bis 11,
**dadurch gekennzeichnet, dass** das Ventilelement (23) eine gasdurchlässige Membran (27) aufweist, die vorteilhaft von einem Ringkörper (32) umfasst und vorteilhaft gegen den einlassseitigen Druck durch wenigstens einen Stützsteg (34) abgestützt ist.

13. Ventil nach einem der Ansprüche 1 bis 12,
**dadurch gekennzeichnet, dass** am Gehäuse (6) wenigstens eine Federzunge (38) vorgesehen ist, die ein Arretierelement zur Befestigung des Ventiles am Gehäuse (1) bildet.

14. Ventil nach einem der Ansprüche 1 bis 13,
**dadurch gekennzeichnet, dass** das Ventilelement (23) in seiner ersten Stellung durch Magnetkraft gehalten und vorteilhaft mit wenigstens einem Druckausgleichselement (53) versehen ist.

15. Ventil nach Anspruch 14,
**dadurch gekennzeichnet, dass** das Druckausgleichselement (53) ein elastisch verformbares Elastomerteil ist, das mit dem Ventilelement (23) verbunden ist und wenigstens eine Öffnung (68) aufweist, die durch eine durch elastische Verformung des Druckausgleichselementes (53) in der Einbaulage erzeugte Schließkraft geschlossen ist.

16. Behälter, vorzugsweise Gehäuse einer Batterie eines Elektrofahrzeuges, mit wenigstens einem Ventil (5, 5a bis 5c) nach einem der Ansprüche 1 bis 15.

17. Behälter nach Anspruch 16,
**dadurch gekennzeichnet, dass** der Behälter (1) für das Ventil (5, 5a bis 5c) wenigstens eine Einbauöffnung (4) aufweist.

18. Behälter nach Anspruch 16 oder 17,
**dadurch gekennzeichnet, dass** das Ventil (5, 5a bis 5c) mit seinem Ringflansch (8) an der Innenseite (12) des Behälters (1) dichtend anliegt.
